# EUROPÄISCHE PATENTSCHRIFT

(11) **EP 3 066 263 B1**
(45) Veröffentlichungstag und Bekanntmachung des Hinweises auf die Patenterteilung: **01.02.2017**
(21) Anmeldenummer: 15709838.5
(22) Anmeldetag: 04.03.2015
(51) Int. Cl.: E01H 1/04, B60P 3/24, E03F 7/10

(54) **KANAL- UND/ODER STRASSENREINIGUNGSFAHRZEUG**
SEWER CLEANING VEHICLE AND/OR STREET CLEANING VEHICLE
VÉHICULE DE NETTOYAGE D'ÉGOUTS ET/OU DE ROUTES

(30) Priorität: 07.03.2014 DE 102014003018
(43) Veröffentlichungstag der Anmeldung: 14.09.2016
(73) Patentinhaber: Wiedemann, Karl, 86465 Welden (DE)
(72) Erfinder: Wiedemann, Karl, 86465 Welden (DE)
(74) Vertreter: Munk, Ludwig
(86) Internationale Anmeldenummer: PCT/EP2015/000485
(87) Internationale Veröffentlichungsnummer: WO 2015/132002

(56) Entgegenhaltungen:
- DD-A- 88 458
- DE-A1- 19 538 846
- DE-C- 222 585

## Beschreibung

Die Erfindung betrifft ein Kanal- und/oder Straßenreinigungsfahrzeug mit wenigstens einem fassförmigen Schmutzabfuhrbehälter zur Aufnahme und zum Transport von bei der Kanal- und/oder Straßenreinigung anfallenden, mineralischen Schmutzrückständen, mit einer Räumeinrichtung zum Ausräumen des Schmutzabfuhrbehälters, die mindestens eine innerhalb des Schmutzabfuhrbehälters vorgesehene, in Längsrichtung des Schmutzabfuhrbehälters sich erstreckende, drehend antreibbare Förderschnecke aufweist, durch die eine ihr nachgeordnete Austragschneckenanordnung beaufschlagbar ist, der ein nach außen führendee Auslass für das Schüttgut zugeordnet ist.

Aus der DE 195 38 846 A1 ist ein Kanalreinigungsfahrzeug eingangs erwähnter Art bekannt. Bei dieser bekannten Anordnung ist die im Schmutzabfuhrbehälter vorgesehene Förderschnecke stationär im Bereich der Behältersohle angeordnet. Eine zuverlässige Ausräumung des Schmutzabfuhrbehälters erfolgt hier nur, wenn die Behälterfüllung selbsttätig nach unten zu der im Bereich der Behältersohle arbeitenden Förderschnecke hin nachrutscht. Dies ist erfahrungsgemäß jedoch oft nicht der Fall, da das die Schmutzabfuhrbehälterfüllung bildende, aus sedimentierten mineralischen Schmutzrückständen bestehende Material verklumpt und Brücken bildet. Bei der bekannten Anordnung besteht daher die Gefahr, dass die im Bereich der Behältersohle angeordnete Förderschnecke sich lediglich freischafft und anschließend leerläuft, so dass das sich nicht im direkten Einzugsbereich der Förderschnecke befindende Material nicht abtransportiert wird. Die der Förderschnecke nachgeordnete Austragschneckenanordnung ist in Verlängerung der Förderschnecke angeordnet und wird dementsprechend nur zuverlässig beaufschlagt, solange die Förderschnecke hiermit fluchtend ist, was den oben genannten Nachteil noch verstärkt. Die bekannte Anordnung erweist sich daher als nicht zuverlässig genug und erfordert oft einen mühsamen händischen Einsatz.

Aus der DE 222 585 A ist eine Vorrichtung zur Entladung von Schiffen bekannt, die eine in Längsrichtung des Laderaums sich erstreckende Förderschnecke aufweist, die zur besseren Erfassung des gesamten Laderaums um eine zur Schneckenachse parallele Achse schwingen kann. Bei Schiffsladungen handelt es sich jedoch um trockenes Schüttgut. Außerdem erfolgt der Abtransport der Ladung nach oben.

Hiervon ausgehend ist es daher die Aufgabe der vorliegenden Erfindung, eine Anordnung eingangs erwähnter Art mit einfachen und kostengünstigen Mitteln so zu verbessern, dass der Schmutzabfuhrbehälter zuverlässig entleert wird.

Diese Aufgabe wird in Verbindung mit einer Anordnung eingangs erwähnter Art auf einfache und kostengünstige Weise dadurch gelöst, dass die mindestens eine Förderschnecke der Räumeinrichtung auf einem um eine in Behälterlängsrichtung verlaufende Achse schwenkbar angeordneten Träger aufgenommen ist, der mittels eines zugeordneten Schwenkantriebs schwenkbar ist, wobei die Förderschnecke gegenüber einer der Behältersohle zugeordneten Mittelstellung beidseitig entlang der Behälterwandung seitlich auslenkbar ist, und dass die Austragsschneckenanordnung quer zur in Behälterlängsrichtung angeordneten Förderschnecke angeordnet ist.

Diese Maßnahmen stellen in vorteilhafter Weise sicher, dass ein Freischaffen der Förderschnecke und eine Brückenbildung innerhalb der Behälterfüllung unterbleiben. Vielmehr wird die Förderschnecke der Räumeinrichtung ständig an das abzutransportierende Material herangeführt, in welches sich die Förderschnecke praktisch in Richtung ihrer seitlichen Auslenkung hineinfräst. Dabei kann das von der Förderschnecke erfasste und in eine Richtung transportierte Material über dem gesamten Schwenkbereich der Förderschnecke, d.h. unabhängig von deren seitlicher Auslenkung, von der quer zur Förderschnecke angeordneten Austragschneckenanordnung zuverlässig abtransportiert werden. Die quer zur Förderschnecke, d.h. in Richtung der Fahrzeugbreite angeordnete Austragschneckenanordnung kann sich ohne Schwierigkeiten über die ganze Weite des Schmutzabfuhrbehälters erstrecken und damit den ganzen Schwenkbereich der Förderschnecke unterfassen, so dass auch bei schwierigen Verhältnissen eine zuverlässige mechanische Räumung des Schmutzabfuhrbehälters erfolgt.

Vorteilhafte Ausgestaltungen und zweckmäßige Fortbildungen der übergeordneten Maßnahmen sind in den Unteransprüchen angegeben.

Zweckmäßig kann die Auslenkung der mindestens einen Förderschnecke der Räumeinrichtung bis auf etwa mittlere Behälterhöhe erfolgen. Hierdurch ist sichergestellt, dass der gesamte untere Schmutzabfuhrbehälterbereich, der in der Regel einen nach unten sich verengenden Querschnitt aufweist und daher für Brückenbildungen sehr anfällig ist, mit Hilfe der Förderschnecke bearbeitet werden kann, so dass sich eine besonders hohe Zuverlässigkeit ergibt.

Bei einem fassförmigen Schmutzabfuhrbehälter mit kreisförmigem oder kreisabschnittförmigem Querschnitt kann die mindestens eine Förderschnecke der Räumeinrichtung einfach um eine der Fass-Mittellängsachse entsprechende Achse schwenkbar angeordnet sein, wobei zweckmäßig ein Schwenkwinkel von vorzugsweise 180° vorgesehen sein kann. Diese Maßnahmen ermöglichen eine einfache und dennoch sehr robuste Bauweise.

Vorteilhaft kann der die mindestens eine Förderschnecke der Räumeinrichtung aufnehmende bügelförmige Träger, der vorzugsweise um eine der Fass-Mittellängsachse entsprechende Achse schwenkbar ist, eine drehbar gelagerte Welle aufweisen, von der zwei Radialarme abstehen, auf denen die Förderschnecke bzw. Förderschnecken mit ihrem Ende gelagert ist bzw. sind. Der schwenkbare Träger ermöglicht eine sehr einfache und robuste Gestaltung der Auslenkeinrichtung etwa in Form eines durch ein Druckmittel betätigbaren Zylinderaggregats.

In weiterer Fortbildung der vorstehend genannten Maßnahmen kann der bügelförmige Träger auf einem vorzugsweise durch den Behälterinnenraum durchquerende Traversen gebildeten, in den Schmutzabfuhrbehälter eingebauten Traggestell aufgenommen sein. Hierbei ist in vorteilhafter Weise eine platzsparende Bauweise möglich, so dass wenig Fassungsvermögen des Schmutzabfuhrbehälters verloren geht. Dennoch ergibt sich eine hohe Stabilität.

Eine weitere, besonders zu bevorzugende Maßnahme kann darin bestehen, dass der Vorschub des der seitlich auslenkbaren Förderschnecke zugeordneten Schwenkantriebs kraftabhängig steuerbar ist. Hierdurch ist sichergestellt, dass eine Überlastung der Förderschnecke vermieden wird, was zu einer weiteren Steigerung der Zuverlässigkeit beiträgt.

Zweckmäßig kann der quer zur Förderschnecke angeordneten Austragsschneckenanordnung eine von der mindestens einen Förderschnecke beaufschlagbare, zum Auslass führende Trog- und Kanalanordnung zugeordnet sein. Diese Maßnahmen ermöglichen einen einfachen seitlichen Austrag des Schüttguts, so dass dieses platzsparend, beispielsweise mittels eines beigestellten Containers entsorgt werden kann.

Die innerhalb des Schmutzabfuhrbehälters vorgesehene, einem inneren Abschnitt der Austragschneckenanordnung zugeordnete Troganordnung erstreckt sich zweckmäßig über die ganze Weite des Schmutzabfuhrbehälters und kann daher von der Förderschnecke auf derem gesamten Schwenkbereich beaufschlagt werden.

In Vervollkommnung dieser Mmaßnahme kann vorgesehen sein, dass dem in Förderrichtung der Förderschnecke vorderen Schneckenende ein über die Weite des Schmutzabfuhrbehälters sich erstreckenden Sammelraum benachbart ist, und dass im unteren Bereich des Sammelraums ein Abschnitt der quer zur Förderschnecke angeordneten Austragschneckenanordnung verläuft. Der Sammelraum gewährleistet eine besonders hohe Zuverlässigkeit.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Querschnitt durch den rückwärtigen Bereich eines SchmutzabfuhrSchmutzabfuhrbehälter eines Kanalreinigungsfahrzeugs und
- Figur 2: einen Längsschnitt durch die Anordnung gemäß Figur 1.

Hauptanwendungsgebiet der vorliegenden Erfindung sind Kanal- und/oder Straßenreinigungsfahrzeuge mit einem Schmutzabfuhrbehälter. Der grundsätzliche Aufbau und die Wirkungsweise von Anordnungen dieser Art sind an sich bekannt und bedürfen daher im vorliegenden Zusammenhang keiner näheren Erläuterung mehr.

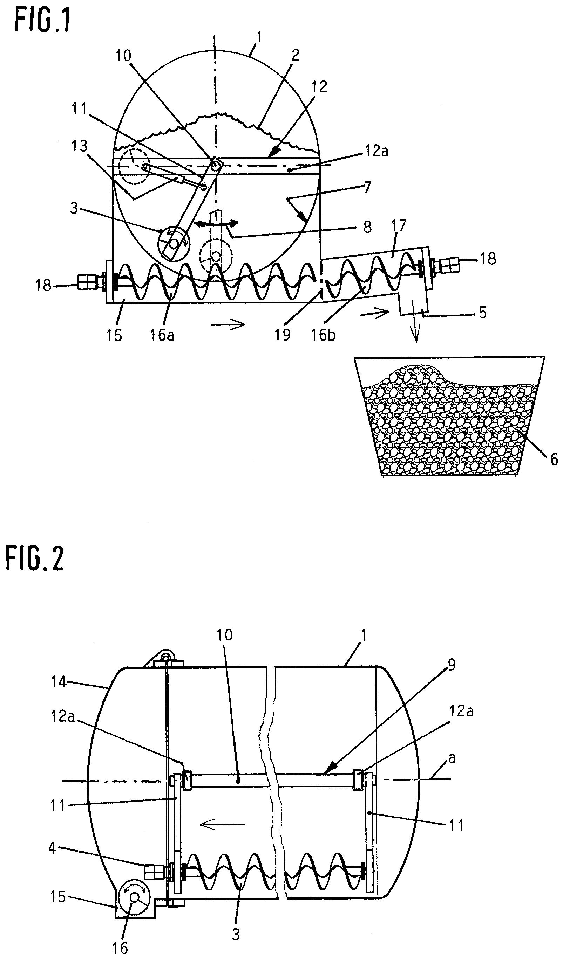

Der in den Figuren 1 und 2 dargestellte Schmutzabfuhrbehälter soll einen Schmutzabfuhrbehälter 1 eines Kanal- und/oder Straßenreinigungsfahrzeugs darstellen, der hier als einen kreisförmigen Querschnitt aufweisendes Fass ausgebildet ist. Das dieses Fass aufnehmende Fahrzeug sowie die dem Fass zugeordneten Saugeinrichtungen etc. sind in den Figuren 1 und 2 weggelassen. Die mineralischen Bestandteile des in den Schmutzabfuhrbehälter 1 eingeworfenen Schmutzes sedimentieren und bilden dementsprechend eine mit der Zeit ansteigende Füllung 2, die in Figur 1 durch ihre unregelmäßige Oberfläche angedeutet ist.

Zum Entleeren des Schmutzabfuhrbehälters 1, das heißt zum Hinausräumen des die Füllung 2 bildenden Schüttguts aus dem Schmutzabfuhrbehälter 1 hinaus, ist eine in den Schmutzabfuhrbehälter 1 eingebaute Räumeinrichtung vorgesehen. Diese enthält eine oder mehrere, hier nur eine in Behälterlängsrichtung sich erstreckende Förderschnecke 3, die mittels eines in Figur 2 gezeigten Antriebsmotors 4 um ihre zur Behältermittellängsachse parallele Längsachse drehend antreibbar ist. Beim Antriebsmotor 4 kann es sich zweckmäßig um einen an einem Ende der Förderschnecke 3 angreifenden Hydraulikmotor handeln. Der von der Förderschnecke 3 erfasste und weggeschaffte Schmutz wird einem in Figur 1 gezeigten, nach außen führenden Auslass 5 zugeführt. Dieser kann sich oberhalb eines beigestellten, später abzuholenden Containers 6 befinden, in den der aus dem Schmutzabfuhrbehälter 1 entfernte Schmutz eingeworfen werden kann. Auch ein Abwurf auf eine Halde oder ein Förderband wären denkbar.

Die sich im Wesentlichen über die Länge des zylindrischen Bereichs des Schmutzabfuhrbehälters 1 erstreckende Förderschnecke 3 arbeitet nicht permanent an derselben Stelle des Behälterinnenraums, sondern ist gegenüber einer der Behältersohle zugeordneten, in Figur 1 unten durch unterbrochene Linien angedeuteten Mittelstellung nach beiden Seiten entlang der benachbarten Innenoberfläche 7 der Behälterwandung auslenkbar, wie in Figur 1 durch den Schwenkpfeil 8 angedeutet ist. Die Förderschnecke 3 kann dementsprechend die von der Füllung 2 bedeckte Innenoberfläche der Behälterwandung überstreichen, so dass trotz eines vergleichsweise kleinen Schneckendurchmessers ein großer Einzugsbereich erreicht wird. Der Durchmesser der Förderschnecke 3 kann daher gegenüber dem Durchmesser des den Schmutzabfuhrbehälter 1 bildenden Fasses vergleichsweise klein sein, so dass für den Antriebsmotor 4 eine vergleichsweise kleine Baugröße reicht.

Im dargestellten Beispiel mit einem einen kreisförmigen Querschnitt aufweisenden Schmutzabfuhrbehälter 1 ist die Förderschnecke 3 einfach um eine der Behältermittellängsachse a entsprechende Achse schwenkbar angeordnet. Der Schwenkwinkel von einer oberen Endstellung zur gegenüberliegenden oberen Endstellung beträgt im dargestellten Beispiel 180°. Die Förderschnecke 3 wird dementsprechend beim dargestellten Beispiel bis auf die mittlere Behälterhöhe angehoben, wie in Figur 1 links durch unterbrochene Linien angedeutet ist. Selbstverständlich kann der genannte Schwenkwinkel an die Verhältnisse des Einzelfalls angepasst sein und dementsprechend im Einzelfall auch mehr oder weniger als 180° betragen.

Bei Schmutzabfuhrbehältern mit nicht kreisförmigem Querschnitt kann eine Steuereinrichtung vorgesehen sein, die den Verlauf der inneren Behälteroberfläche abtastet und die Förderschnecke 3 bzw. einen diese aufnehmenden Träger dem Verlauf der Innenoberfläche des Schmutzabfuhrbehälters 1 nachführt.

Im dargestellten Beispiel mit schwenkbar angeordneter Förderschnecke 3 ist diese auf einem bügelförmigen Träger 9 aufgenommen, der hier um eine der Behältermittellängsachse a entsprechende Achse schwenkbar im Schmutzabfuhrbehälter 1 angeordnet ist. Der Träger 9 besteht im dargestellten Beispiel aus einer drehbar gelagerten koaxial zur Behälterachse a angeordneten Welle 10, an der zwei in radialer Richtung abstehende Radialarme 11 befestigt sind, auf denen die zugeordnete Förderschnecke 3 mit ihren Enden gelagert ist. Der schwenkbare Träger 9 ist seinerseits auf einem in den Schmutzabfuhrbehälter 1 eingebauten Traggestell 12 schwenkbar aufgenommen. Zur Bildung des Traggestells 12 sind im dargestellten Beispiel einfach zwei den Behälterinnenraum in radialer Richtung durchquerende, an der Behälterwand 7 befestigte Traversen 12a vorgesehen, auf denen die Welle 10 des Trägers 9 drehbar gelagert ist.

Dem die Förderschnecke 3 aufnehmenden, auf dem Traggestell 12 schwenkbar gelagerten Träger 11 ist ein Schwenkaggregat 13 zugeordnet. Dabei kann es sich, wie in Figur 1 angedeutet ist, um ein an einer der das Traggestell 12 bildenden Traversen 12a abgestütztes Zylinderaggregat handeln. Die diesem zugeordneten Versorgungsleitungen können auf dem Traggestell 12 verlegt sein. Die dem Antriebsmotor 4 der Förderschnecke 3 zugeordneten Versorgungsleitungen können ebenfalls auf dem Traggestell 12 und auf dem Träger 9 bzw. dem dem Antriebsmotor 4 benachbarten Radialarm 11 des Trägers 9 verlegt sein.

Um eine Überlastung der Förderschnecke 3 bzw. des dieser zugeordneten Antriebsmotors 4 zu verhindern kann dem Schwenkaggregat 13 eine Steuereinrichtung zugeordnet sein, die den Schwenkvorschub des Schwenkaggregats 13 kraftabhängig steuert. Die mittels des Schwenkaggregats 13 gegen die Füllung 2 gedrückte Förderschnecke 3 übt auf das Schwenkaggregat 13 eine gewisse Gegenkraft aus. Die vorstehend erwähnte Steuerung kann dabei so ausgebildet sein, dass die auf das Schwenkaggregat 13 ausgeübte Gegenkraft ein vorgegebenes Maß nicht übersteigt.

Der Schmutzabfuhrbehälter 1 ist, wie in Figur 2 angedeutet ist, an seinem in Förderrichtung der Förderschnecke 3 vorderen Ende mit einem Schwenkdeckel 14 versehen. Die Förderrichtung der Förderschnecke 3 ist in Figur 2 durch einen nicht näher bezeichneten Pfeil angedeutet, der in Figur 2 von rechts nach links weist. Zum Entleeren des Schmutzabfuhrbehälters 1 kann einfach der Schwenkdeckel 14 geöffnet werden, so dass das von der Förderschnecke 3 vorgeschobene Material über das offene Behälterende aus dem Schmutzabfuhrbehälter 1 herausfallen kann. Der der Förderschnecke 3 zugeordnete Antriebsmotor befindet sich im dargestellten Beispiel am in Förderrichtung vorderen Ende der Förderschnecke 3, so dass das von dieser vorgeschobene Material am Antriebsmotor 4 vorbeigeschoben wird, der nur eine vergleichsweise kleine Baugröße hat. Dasselbe gilt für den benachbarten Radialarm 11 des Trägers 9, der daher zweckmäßig vergleichsweise schlank ausgebildet sein kann.

Im dargestellten Beispiel ist, wie am besten aus Figur 2 ersichtlich ist, der in den Innenraum des Schmutzabfuhrbehälters übergehende Innenraum des Schwenkdeckels 14 als Sammelraum 20 ausgebildet, der unten einen gegenüber der Sohle des Schmutzabfuhrbehälters 1, hier gegenüber der Sohle des zylindrischen Mittelbereichs des Schmutzabfuhrbehälters 1 abgesenkten, quer zur Mittelllängsachse a des Schmutzabfuhrbehälters 1 und damit auch quer zur im Schmutzabfuhrbehälter 1 angeordneten Förderschnecke 3 in Richtung der Fahrzeugbreite verlaufenden, trogförmigen Austragkanal 15 aufweist, dem eine quer zur im Schmutzabfuhrbehälter 1 angeordneten Förderschnecke 3, das heißt quer zur Behälterschnecke angeordnete Austragschneckenanordnung 16 zugeordnet ist, die das in den trogförmigen Austragkanal 15 hineinfallende Material seitlich weg- und dem Auslass 5 zuführt.

Im dargestellten Beispiel ist die in Richtung der Fahrzeugbreite sich erstreckende Austragschneckenanordnung 16, wie am besten aus Figur 1 ersichtlich ist, in zwei aufeinanderfolgende Abschnitte 16a, 16b unterteilt, nämlich einen im deckelseitig vorgesehenen, trogförmigen Austragkanal 15 angeordneten, stationären Abschnitt 16a und einen in einem an den Austragkanal 15 anschließbaren, den Auslass 5 enthaltenden Rohr 17 angeordneten, zweiten Abschnitt 16 b. Die beiden Abschnitte 16 a, 16 b der Austragschneckenanordnung sind zweckmäßig durch eigene Antriebsmotoren 18 antreibbar, die im dargestellten Beispiel den voneinander abgewandten Enden der Abschnitte 16 a, b zugeordnet sind. Dabei kann es sich vorteilhaft ebenfalls wie beim Antriebsmotor 4 der Förderschnecke 3 um Hydraulikmotoren handeln.

Das Rohr 17 ist, wie durch eine unterbrochene Trennlinie 19 angedeutet ist, vom deckelseitig vorgesehenen Austragkanal 15 abnehmbar bzw. hiervon abschwenkbar, so dass sich im fahrbereiten Zustand kein unzulässiger, seitlicher Überstand ergibt und bei der Entleerung des Schmutzabfuhrbehälters 1 der Abwurf dennoch in einer gewünschten Entfernung vom Schmutzabfuhrbehälter 1 bzw. einem diesen aufnehmenden Fahrzeug erfolgt, so dass z.B. ein geräumiger Container 6 beigestellt werden kann.

Selbstverständlich kann auch vorgesehen sein, dass das den Auslass 5 enthaltende Rohr 17 mit zugeordnetem Abschnitt 16b Austragschneckenanordnung wahlweise links oder rechts an das betreffende Ende des trogförmigen Auslasskanals 15 angesetzt wird. Dementsprechend wird dann zweckmäßig auch der innere Abschnitt 16a der Austragschneckenanordnung samt Antrieb umgedreht, der damit auf die andere Seite kommt. Auf diese Weise ergibt sich eine entsprechende Umkehr der Förderrichtung der Austragschneckenanordnung. Es ist daher möglich, den Container 6 wahlweise links oder rechts beizustellen.

Der dem äußeren Rohr 17 vorgeordnete, innere trogförmige Austragkanal 15 erstreckt sich über eine der inneren Weite des Schmutzabfuhrbehälters 1 und damit der ganzen, horizontalen Weite des Schwenkbereichs der Förderschnecke 3 entsprechende Länge. Dasselbe gilt dementsprechend auch für die Breite des unteren Bereichs des oben erwähnten, den inneren Abschnitt der zum Auslass 5 führenden Trog- und Kanalanordnung in Form des trogförmigen Austragkanals 15 enthaltenden Sammelraums 20, dessen Seitenwände hierzu von unten tangential in den kreisförmigen Umfang des fassförmigen Schmutzabfuhrbehälters 1 einschneiden, wie aus Fig. 1 erkennbar ist. Durch den inneren Austragkanal 15 und den diesem zugeordneten inneren Abschnitt 16a der Austragschneckenanordnung wird somit der gesamte Schwenkbereich der Förderschnecke 3, der der inneren Weite des Schmutzabfuhrbehälters 1 entspricht, unterfasst.

Im vorstehend beschriebenen, bevorzugten Ausführungsbeispiel enthält die dem Schmutzabfuhrbehälter 1 zugeordnete Räumeinrichtung nur eine Förderschnecke 3. Selbstverständlich wäre es aber auch denkbar, mehrere parallele Förderschnecken 3 vorzusehen, die entweder auf einem gemeinsamen, schwenkbaren Träger aufgenommen sein können oder denen jeweils eigene, schwenkbare Träger zugeordnet sein können, denen dann jeweils nur ein Winkelabschnitt des gesamten gewünschten Schwenkwinkels der Räumeinrichtung zugeordnet sein kann.

## Patentansprüche

1. Kanal- und/oder Straßenreinigungsfahrzeug mit wenigstens einem fassförmigen Schmutzabfuhrbehälter (1) zur Aufnahme und zum Transport von bei der Kanal- und/oder Straßenreinigung anfallenden, mineralischen Schmutzrückständen, mit einer Räumeinrichtung zum Ausräumen des Schmutzabfuhrbehälters (1), die mindestens eine innerhalb des Schmutzabfuhrbehälters (1) vorgesehene, in Längsrichtung des Schmutzabfuhrbehälters (1) sich erstreckende, drehend antreibbare Förderschnecke (3) aufweist, durch die eine ihr nachgeordnete Austragschneckenanordnung (16a, b) beaufschlagbar ist, der ein nach außen führender Auslass (5) für das Schüttgut zugeordnet ist, **dadurch gekennzeichnet, dass** die mindestens eine Förderschnecke (3) der Räumeinrichtung auf einem um eine in Behälterlängsrichtung verlaufende Achse schwenkbar angeordneten Träger (9) aufgenommen ist, der mittels eines zugeordneten Schwenkantriebs (13) schwenkbar ist, wobei die Förderschnecke (3) gegenüber einer der Behältersohle zugeordneten Mittelstellung beidseitig entlang der Behälterwandung (7) seitlich auslenkbar ist, und dass die Austragschneckenanordnung (16a, b) quer zur in Behälterlängsrichtung angeordneten Förderschnecke (3) angeordnet ist.

2. Kanal- und/oder Straßenreinigungsfahrzeug nach Anspruch 1, **dadurch gekennzeichnet, dass** die mindestens eine Förderschnecke (3) der Räumeinrichtung beidseitig bis auf etwa mittlere Behälterhöhe auslenkbar ist.

3. Kanal- und/oder Straßenreinigungsfahrzeug nach einem der vorhergehenden Ansprüche, **dadurch gekennzeichnet, dass** die mindestens eine Förderschnecke (3) der Räumeinrichtung bei einem fassförmigen Schmutzabfuhrbehälter (1) mit kreisförmigem oder kreisabschnittförmigem Querschnitt um eine der Fass-Mittellängsachse (a) entsprechende Achse um vorzugsweise 180° schwenkbar angeordnet ist.

4. Kanal- und/oder Straßenreinigungsfahrzeug nach einem der vorhergehenden Ansprüche, **dadurch gekennzeichnet, dass** der die mindestens eine Förderschnecke (3) der Räumeinrichtung aufnehmende, vorzugsweise um eine der Fass-Mittellängsachse (a) entsprechende Achse schwenkbare Träger (9) als Schwenkbügel ausgebildet ist, der eine drehbar gelagerte Welle (10) und zwei hieran befestigte, radial abstehende Radialarme (11) aufweist, auf denen die mindestens eine Förderschnecke (3) mit ihren Enden gelagert ist.

5. Kanal- und/oder Straßenreinigungsfahrzeug nach einem der vorhergehenden Ansprüche, **dadurch gekennzeichnet, dass** der bügelförmige Träger (9) auf einem vorzugsweise durch den Behälterinnenraum durchquerende Traversen (12 a) gebildeten, in den Schmutzabfuhrbehälter (1) eingebauten Traggestell (12) schwenkbar aufgenommen ist.

6. Kanal- und Straßenreinigungsfahrzeug nach einem der vorhergehenden Ansprüche 4 oder 5, **dadurch gekennzeichnet, dass** die mindestens eine Förderschnecke (3) durch einen an einem ihrer Enden, vorzugsweise am ausgangsnahen Ende, angreifenden, vorzugsweise als Hydraulikmotor ausgebildeten Antriebsmotor (4) antreibbar ist, der über träger- und traggestellseitig vorgesehene Versorgungsleitungen mit Energie versorgbar ist.

7. Kanal- und Straßenreinigungsfahrzeug nach einem der vorhergehenden Ansprüche, **dadurch gekennzeichnet, dass** der dem Träger (9) zugeordnete Schwenkantrieb (3) als am Traggestell (12) abgestütztes Zylinderaggregat ausgebildet ist, das über traggestellseitig vorgesehene Leitungen mit Energie versorgbar ist.

8. Kanal- und Straßenreinigungsfahrzeug nach einem der vorhergehenden Ansprüche, **dadurch gekennzeichnet, dass** der Vorschub der mindestens einen Förderschnecke (3) in seitlicher Auslenkrichtung kraftabhängig steuerbar ist.

9. Kanal- und Straßenreinigungsfahrzeug nach einem der vorhergehenden Ansprüche, **dadurch gekennzeichnet, dass** der Austragschneckenanordnung (16 a, b) eine von der mindestens einen Förderschnecke (3) beaufschlagbare, zum Auslass (5) führende Trog- und Kanalanordnung zugeordnet ist.

10. Kanal- und Straßenreinigungsfahrzeug nach Anspruch 9, **dadurch gekennzeichnet, dass** die Austragschneckenanordnung unterteilt ist und einen in einem zugeordneten, im Bereich der Behälterrückseite, vorzugsweise in einem dem Schmutzabfuhrbehälter (1) zugeordneten Schwenkdeckel (14), unten vorgesehenen trogförmigen Austragkanal (15) angeordneten, stationären Abschnitt (16 a) und einen in einem den Auslass (5) enthaltenden, wahlweise an den Austragkanal (15) anschließbaren bzw. davon entfernbaren Rohr (17) angeordneten, beweglichen Abschnitt (16 b) aufweist.

11. Kanal- und/oder Straßenreinigungsfahrzeug nach Anspruch 10, **dadurch gekennzeichnet, dass** der innerhalb des Schmutzabfuhrbehälters (1) vorgesehene Abschnitt (16a) der Austragschneckenanordnung eine der Weite des Schwenkbereichs der Förderschnecke (3) vorzugsweise der Weite des Schmutzabfuhrbehälters (1) zumindest entsprechende Länge aufweist.

12. Kanal- und/oder Straßenreinigungsfahrzeug nach einem der vorhergehenden Ansprüche, **dadurch gekennzeichnet, dass** dem in Förderrichtung der Förderschnecke (3) vorderen Schneckenende ein über die Weite des Schmutzabfuhrbehälters (1) sich erstreckender Sammelraum (20) benachbart ist, und dass im unteren Bereich des Sammelraums (20) ein Abschnitt (16a) der quer zur Förderschnecke (3) angeordneten Austragsschneckenanordnung verläuft.

## Claims

1. A sewer cleaning vehicle and/or street cleaning vehicle comprising at least one barrel shaped dirt removal container (1) for receiving and transporting mineral dirt residues accumulating during sewer and/or street cleaning, further comprising a removal device for clearing out the dirt removal container (1), said removal device comprising at least one conveying worm (3) provided within the dirt removal container (1), which extends in a longitudinal direction of the dirt removal container (1) and is rotatably drivable, by which a subsequently arranged discharge worm arrangement (16a) is suppliable which is associated with an outlet (5) for the bulk material leading to the outside, **characterized in that** the at least one conveying worm (3) of the removal device is attached to a carrier (9) which is swivel mounted on an axis extending in a longitudinal direction of the container, such carrier (9) being swivellable by means of an associated swivel drive (13), with the conveying worm (3) being sideways deflectable relative to a centre position associated with the container bottom on both sides along the container wall (7), and that the discharge worm arrangement (16a, b) is arranged transversely to the conveying worm (3) extending in a longitudinal direction of the container.

2. A sewer cleaning vehicle and/or street cleaning vehicle in accordance with claim 1, **characterized in that** the at least one conveying worm (3) of the removal device is deflectable to both sides up to an approximately medium height of the container.

3. A sewer cleaning vehicle and/or street cleaning vehicle in accordance with any of the preceding claims, **characterized in that** the at least one conveying worm (3) of the removal device in a barrel shaped dirt removal container (1) with a circle shaped or circle section shaped cross-section is swivellable by preferably 180° about an axis corresponding to the middle longitudinal axis of the barrel (a).

4. A sewer cleaning vehicle and/or street cleaning vehicle in accordance with any of the preceding claims, **characterized in that** the carrier (9) receiving the at least one conveying worm (3) of the removal device, preferably swivellable about an axis corresponding to the middle length of the barrel (b) is designed as a swivel bracket comprising a rotatably mounted shaft (10) and two radially protruding radial arms (11) attached thereto to which the two ends of at least one conveying worm (3) are attached.

5. A sewer cleaning vehicle and/or street cleaning vehicle in accordance with any of the preceding claims, **characterized in that** the bow shaped carrier (9) is swivel-mounted on a carrier rack (12) preferably formed by the cross-member (12a) extending through the container inside and built into the dirt removal container (1).

6. A sewer cleaning vehicle and/or street cleaning vehicle in accordance with any of the preceding claims 4 or 5, **characterized in that** the at least one conveying worm (3) is drivable by a drive motor (4), preferably designed as a hydraulic motor, acting on one of its ends, preferably the one close to the outlet of said conveying worm (3), such drive motor (4) being suppliable with energy by supply lines provided on the carrier side and the carrier rack side (12).

7. A sewer cleaning vehicle and/or street cleaning vehicle in accordance with any of the preceding claims, **characterized in that** the swivel drive (13) associated with the carrier (9) is designed as a cylinder unit supported on the carrier rack (12), which is suppliable with energy by supply lines provided on the carrier rack side.

8. A sewer cleaning vehicle and/or street cleaning vehicle in accordance with any of the preceding claims, **characterized in that** the feedrate of the at least one conveying worm (3) is force controllable in the direction of lateral deflection.

9. A sewer cleaning vehicle and/or street cleaning vehicle in accordance with any of the preceding claims, **characterized in that** associated with the discharge worm arrangement (16a, b) provision is made for a trough and channel arrangement leading to the outlet (5) and suppliable by the at least one conveying worm (3).

10. A sewer cleaning vehicle and/or street cleaning vehicle in accordance with claim 9, **characterized in that** the discharge worm arrangement is subdivided and comprises a stationary section (16 a) arranged in an associated trough shaped discharge channel (15) provided at the bottom in the region of the container rear side, preferably in a swivel cover (14) associated with the dirt outlet container, and further comprises a movable section (16 b) arranged in a tube (17) which is selectively connectable with or detachable from the discharge channel (15) and contains the outlet (5).

11. A sewer cleaning vehicle and/or street cleaning vehicle in accordance with claim 10, **characterized in that** the section (16 a) of the outlet worm arrangement provided within the dirt removal container (1) has a length at least corresponding to the width of the swivel range of the conveying worm (3), preferably to the width of the dirt removal container (1).

12. A sewer cleaning vehicle and/or street cleaning vehicle in accordance with any of the preceding claims, **characterized in that** adjacent to the front end of the conveying worm in the feed direction of the conveying worm (3) provision is made for a collection chamber (20) extending along the width of the dirt removal container (1), and that in the bottom area of said collection chamber (20) a section (16 a) is provided extending in a direction transverse to the conveying worm (3).

## Revendications

1. Véhicule de nettoyage d'égouts et/ou des rues comprenant au moins un récipient d'évacuation de boues (1) en forme de fût qui est destiné à recevoir et à transporter des résidus de boue minéraux produits lors du nettoyage d'égouts et/ou des rues, un dispositif à curer qui est destiné à vider ledit récipient d'évacuation de boues (1) et qui présente au moins une vis transporteuse (3) laquelle est prévue à l'intérieur du récipient d'évacuation de boues (1), s'étend dans la direction longitudinale du récipient d'évacuation de boues (1) et peut être entraînée en rotation et par laquelle peut être alimenté un ensemble de vis d'évacuation (16 a, b) qui est placé en aval de celle-ci et auquel est associée une sortie (5) pour la matière en vrac qui mène vers l'extérieur, **caractérisé par le fait que** ladite au moins une vis transporteuse (3) du dispositif à curer est reçue sur un support (9) qui est disposé de manière à pouvoir pivoter autour d'un axe s'étendant dans la direction longitudinale du récipient et qui peut pivoter au moyen d'un mécanisme d'entraînement en pivotement (13) associé, dans lequel ladite vis transporteuse (3) peut être déviée latéralement de part et d'autre le long de la paroi de récipient (7) par rapport à une position médiane associée au fond du récipient, et que ledit ensemble de vis d'évacuation (16 a, b) est disposé transversalement à la vis transporteuse (3) disposée dans la direction longitudinale du récipient.

2. Véhicule de nettoyage d'égouts et/ou des rues selon la revendication 1, **caractérisé par le fait que** ladite au moins une vis transporteuse (3) du dispositif à curer peut être déviée de part et d'autre jusqu'à mi-hauteur du récipient à peu près.

3. Véhicule de nettoyage d'égouts et/ou des rues selon l'une quelconque des revendications précédentes, **caractérisé par le fait que** ladite au moins une vis transporteuse (3) du dispositif à curer, dans un récipient d'évacuation de boues (1) en forme de fût ayant une section transversale circulaire pu en forme de segment de cercle, est disposée de manière à pouvoir pivoter de préférence de 180° autour d'un axe correspondant à l'axe longitudinal médian de fût (a).

4. Véhicule de nettoyage d'égouts et/ou des rues selon l'une quelconque des revendications précédentes, **caractérisé par le fait que** le support (9) recevant ladite au moins une vis transporteuse (3) du dispositif à curer et pivotant de préférence autour d'un axe correspondant à l'axe longitudinal médian de fût (a) est réalisé en tant qu'étrier de pivotement qui présente un arbre (10) logé à rotation et deux bras radiaux (11) fixés sur celui-ci et faisant saillie radialement sur lesquels ladite au moins une vis transporteuse (3) est logée par ses extrémités.

5. Véhicule de nettoyage d'égouts et/ou des rues selon l'une quelconque des revendications précédentes, **caractérisé par le fait que** ledit support (9) en forme d"étrier est reçu à pivotement sur un cadre porteur (12) formé de préférence par des traverses (12 a) traversant l'intérieur du récipient et monté à l'intérieur du récipient d'évacuation de boues (1).

6. Véhicule de nettoyage d'égouts et/ou des rues selon l'une quelconque des revendications précédentes 4 ou 5, **caractérisé par le fait que** ladite au moins une vis transporteuse (3) est entraînable par l'intermédiaire d'un moteur d'entraînement (4) qui se prend sur l'une de ses extrémités, de préférence sur l'extrémité située près de la sortie et est réalisé de préférence en tant que moteur hydraulique et qui peut être alimenté en énergie via des conduites d'alimentation prévues du côté du support et du cadre porteur.

7. Véhicule de nettoyage d'égouts et/ou des rues selon l'une quelconque des revendications précédentes, **caractérisé par le fait que** le mécanisme d'entraînement en pivotement (3) associé au support (9) est réalisé en tant que groupe de vérin qui est appuyé sur le cadre porteur (12) et peut être alimenté en énergie via des conduites prévues du côté du cadre porteur.

8. Véhicule de nettoyage d'égouts et/ou des rues selon l'une quelconque des revendications précédentes, **caractérisé par le fait que** l'avance de ladite au moins une vis transporteuse (3) dans la direction de déviation latérale peut être commandée en fonction de la force.

9. Véhicule de nettoyage d'égouts et/ou des rues selon l'une quelconque des revendications précédentes, **caractérisé par le fait qu'**audit ensemble de vis d'évacuation (16 a, b) est associé un ensemble d'auge et de canal apte à être alimenté par ladite au moins une vis transporteuse (3) et menant vers la sortie (5).

10. Véhicule de nettoyage d'égouts et/ou des rues selon la revendication 9, **caractérisé par le fait que** ledit ensemble de vis d'évacuation est divisé et présente une section (16 a) stationnaire qui est disposée dans un canal d'évacuation (15) associé en forme d'auge lequel est prévu en bas au niveau de la face arrière du récipient, de préférence dans un couvercle pivotant (14) associé au récipient d'évacuation de boues (1), ainsi qu'une section (16 b) mobile qui est disposée dans un tuyau (17) contenant la sortie (5) et apte, au choix, à être raccordé audit canal d'évacuation (15) ou bien à être écarté de celui-ci.

11. Véhicule de nettoyage d'égouts et/ou des rues selon la revendication 10, **caractérisé par le fait que** la section (16 a) de l'ensemble de vis d'évacuation qui est prévue à l'intérieur du récipient d'évacuation de boues (1) présente une longueur qui correspond au moins à l'amplitude de la plage de pivotement de la vis transporteuse (3), de préférence à la largeur du récipient d'évacuation de boues (1).

12. Véhicule de nettoyage d'égouts et/ou des rues selon l'une quelconque des revendications précédentes, **caractérisé par le fait qu'**un espace collecteur (20) s'étendant sur la largeur du récipient d'évacuation de boues (1) est voisin de l'extrémité de vis située avant dans la direction de transport de la vis transporteuse (3), et qu'une section (16 a) de l'ensemble de vis d'évacuation disposé transversalement à la vis transporteuse (3) s'étend dans la zone inférieure dudit espace collecteur (20).
